# EUROPÄISCHE PATENTANMELDUNG

(11) **EP 4 544 903 A1**
(43) Veröffentlichungstag der Anmeldung: **30.04.2025**
(21) Anmeldenummer: 23205760.4
(22) Anmeldetag: 25.10.2023
(51) Int. Cl.: A01G 9/14, A01G 13/02, A01M 21/00, E01C 9/00

(54) **UNKRAUTVERHINDERUNGSEINRICHTUNG, UNTERELEMENT FÜR EINE UNKRAUTVERHINDERUNGSEINRICHTUNG UND VERFAHREN ZUR HERSTELLUNG EINER UNKRAUTVERHINDERUNGSEINRICHTUNG**

(71) Anmelder: Targa Projekt AG, 6052 Hergiswil (NW) (CH)
(72) Erfinder: VON ARX, Daniel, 1820 Montreux (CH)
(74) Vertreter: EGLI-EUROPEAN PATENT ATTORNEYS

(57) **Zusammenfassung**

Es wird eine Unkrautverhinderungseinrichtung (4) zur Verhinderung von Unkraut in der Umgebung eines aus einem Boden (2) wachsenden Pflanzenstamms (3) vorgesehen, umfassend: einen Aufnahmeabschnitt (5), der sich im Wesentlichen entlang einer Aufnahmerichtung (A) senkrecht zum Boden (2) erstreckt, und ausgestaltet ist, den Pflanzenstamm (3) aufzunehmen; und einen Umgebungsabschnitt (6), der den Aufnahmeabschnitt (5) zumindest abschnittsweise umgibt und ausgestaltet ist, mit einer Unterseite (6b) dem Boden zugewandt zu sein.

## Beschreibung

Die vorliegende Erfindung betrifft eine Unkrautverhinderungseinrichtung, ein Unterelement für eine Unkrautverhinderungseinrichtung und ein Verfahren zur Herstellung einer Unkrautverhinderungseinrichtung.

Im Pflanzenanbau, insbesondere im Weinanbau, ist es problematisch, dass sich rund um die Kulturpflanze im Boden Unkraut bilden kann. Dieses kann das Wachstum der Pflanze beeinträchtigen. Weiterhin können Krankheiten auf die Pflanze übertragen werden. Ausserdem ist es problematisch, dass Wasser aus dem Boden entweichen kann und somit wiederum das Wachstum der Pflanze beeinträchtigt werden kann.

Es ist daher Aufgabe der vorliegenden Erfindung, das Pflanzenwachstum von Kulturpflanzen zu verbessern.

Diese Aufgabe wird erfindungsgemäss gelöst durch eine Unkrautverhinderungseinrichtung nach Anspruch 1.

Gemäss einem ersten Aspekt wird eine Unkrautverhinderungseinrichtung zur Verhinderung von Unkraut in der Umgebung eines aus einem Boden wachsenden Pflanzenstamms vorgesehen, wobei die Unkrautverhinderungseinrichtung umfasst: einen Aufnahmeabschnitt, der sich im Wesentlichen entlang einer Aufnahmerichtung senkrecht zum Boden erstreckt, und ausgestaltet ist, den Pflanzenstamm aufzunehmen; und einen Umgebungsabschnitt, der den Aufnahmeabschnitt zumindest abschnittsweise umgibt und ausgestaltet ist, mit einer Unterseite dem Boden zugewandt zu sein.

Gemäss diesem Aspekt kann eine Kulturpflanze gezielt im Aufnahmeabschnitt wachsen. So kann Licht und Wasser im Aufnahmeabschnitt gebündelt werden, und das Pflanzenwachstum verbessert werden. Da weiterhin der Umgebungsabschnitt vorgesehen ist, der dem Boden zugewandt ist, kann Unkrautwachstum um die Kulturpflanze, insbesondere um den Stamm, unterdrückt werden. Denn der Umgebungsabschnitt unterdrückt die Lichtzufuhr in der Umgebung des Pflanzenstamms und kann somit das Wachstum unterbinden. Auch kann das Gewicht des Umgebungsabschnitts, wenn er auf dem Boden aufliegt, das Wachstum von Unkraut verhindern. Der Umgebungsabschnitt ist damit ein Unkrautverhinderungsabschnitt.

Es ist vorteilhaft, wenn der Umgebungsabschnitt an der Unterseite bezogen auf eine Kontaktfläche mit dem Boden eine Kraft von mindestens 100 N/m², vorzugsweise 200 N/mm², nochmals bevorzugt von 500 N/m² aufbringt. Somit kann genügend Anpressdruck auf den Boden ausgeübt werden.

Vorteilhafterweise ist der Umgebungsabschnitt aus dem Vollen gefertigt. Auch dadurch kann der nötige Anpressdruck aufgebracht werden.

Der Umgebungsabschnitt erstreckt sich vorzugsweise in zumindest einer Ebene, insbesondere an der Unterseite, senkrecht zur Aufnahmerichtung bis mindestens 0,2 m, nochmals bevorzugt mindestens 0,3 m, weiterhin bevorzugt mindestens 0,5 m von einem Rand des Aufnahmeabschnitts. Die Erstreckung erfolgt dabei vorzugsweise kontinuierlich in radialer Richtung und/oder Umfangsrichtung.

Der Umgebungsabschnitt umgibt den Aufnahmeabschnitt in einer Umfangsrichtung um mindestens 90°, weiterhin bevorzugt mindestens 180°, insbesondere bevorzugt vollständig.

Gemäss einem weiteren Aspekt kann der Umgebungsabschnitt einen UV-Transmissionsgrad von maximal 50%, vorzugsweise von maximal 20%, nochmals bevorzugt 10% aufweisen.

Auf diese Weise kann eine UV-Lichtzufuhr zum Boden in der Umgebung des Pflanzenstamms unterbunden werden. Zur Kenntnis zu nehmen ist, dass das UV-Spektrum im Bereich von 280 - 400 nm liegt.

Gemäss noch einem weiteren Aspekt kann die Unterseite zumindest abschnittsweise eben ausgebildet sein.

Somit kann der Umgebungsabschnitt einfach auf dem Boden aufliegen. Daher kann der Anpressdruck verteilt werden.

Es ist vorteilhaft, wenn drei ebene Abschnitte der Unterseite nicht entlang einer Linie angeordnet sind. Somit kann die Stabilität auf dem Boden verbessert werden.

Alternativ oder zusätzlich kann die Oberseite zumindest abschnittsweise eben ausgebildet sein. Vorzugsweise ist der Umgebungsabschnitt zumindest abschnittsweise plattenartig, also mit gegenüberliegenden ebenen Ober- und Unterseiten, ausgebildet.

Gemäss noch einem weiteren Aspekt kann der Umgebungsabschnitt einen konkaven Abschnitt an der Unterseite aufweisen.

Dadurch können in diesem Abschnitt Kriech- und Wühltiere wie beispielsweise Würmer aufgenommen werden, die eine Auflockerung des Bodens ermöglichen. Der konkave Abschnitt kann nämlich so vorgesehen sein, dass er dem Boden zugewandt ist.

Der konkave Abschnitt ist vorzugsweise mit der Umgebung des Umgebungsabschnitts gekoppelt. So kann er sich vorzugsweise bis zu einem Rand des Umgebungsabschnitts erstrecken.

Somit kann ein Gasaustausch mit der Umgebung stattfinden.

Gemäss noch einem weiteren Aspekt kann eine Öffnungsabmessung des Aufnahmeabschnitts veränderlich, vorzugsweise kontinuierlich veränderlich, sein.

Somit kann sich der Aufnahmeabschnitt dem Wachstum des Pflanzenstamms anpassen. Insbesondere kann sich die Öffnungsabmessung aufweiten, um dem Pflanzenwachstum gerecht zu werden.

Vorzugsweise umfasst die Unkrautverhinderungseinrichtung weiterhin: einen elastischen Abschnitt, der so vorgesehen ist, dass er die Veränderung der Öffnungsabmessung erlaubt.

Daher kann der elastische Abschnitt einfach durch, vorzugsweise direkte, Kontaktierung mit dem Pflanzenstamm verformt werden. Es ist somit möglich, die Veränderlichkeit auf einfache Weise sicherzustellen. Der elastische Abschnitt kann auf seiner Innenseite den Aufnahmeabschnitt definieren. Der elastische Abschnitt kann eine höhere Elastizität als der Umgebungsabschnitt aufweisen.

Gemäss noch einem weiteren Aspekt kann die Unkrautverhinderungseinrichtung weiterhin umfassen: eine Bewässerungsführungseinrichtung, die ausgestaltet ist, ein flüssiges Bewässerungsmedium, vorzugsweise zumindest abschnittsweise linear und/oder in Richtung Boden, zu führen.

Dies ermöglicht eine Führung und geeignete Verteilung des Bewässerungsmediums über die Unkrautverhinderungseinrichtung. Insbesondere ermöglicht es eine gezielte Bewässerung des Bodens und verbessert somit das Pflanzenwachstum. Insbesondere kann das Bewässerungsmedium zumindest abschnittsweise von einer Seiter einer der Unterseite entgegengesetzten Oberseite in Aufnahmerichtung zu einer Seite der Unterseite geführt werden. Eine Austrittsöffnung kann in Aufnahmerichtung auf einer Seite der Unterseite für das Bewässerungsmedium gebildet werden. Vorzugsweise ist die Bewässerungsführungseinrichtung zumindest abschnittsweise rinnenartig an einer der Unterseite entgegengesetzten Oberseite ausgebildet.

Somit kann die Oberseite effektiv für die Führung des Bewässerungsmediums genutzt werden. Dann kann das Bewässerungsmedium entlang der Oberseite strömen. Es ist möglich, dass die Oberseite in Richtung des Aufnahmeabschnitts geneigt ist. Auch kann die Rinne in Richtung des Aufnahmeabschnitts verjüngend ausgebildet sein.

Alternativ oder zusätzlich kann die Bewässerungsführungseinrichtung zumindest abschnittsweise von dem Aufnahmeabschnitt gebildet werden.

Dadurch kann die Bewässerungsführungseinrichtung effektiv gebildet werden, ohne weitere Elemente vorzusehen. Insbesondere kann eine Öffnung des Aufnahmeabschnitts auf der Seite des Umgebungsabschnitts als Austritt für das Bewässerungsmedium genutzt werden.

Gemäss noch einem weiteren Aspekt kann die Unkrautverhinderungseinrichtung weiterhin umfassen: eine Roboterführungseinrichtung, die ausgestaltet ist, einen Roboter, vorzugsweise zumindest abschnittsweise linear entlang einer Richtung senkrecht zur Aufnahmerichtung, zu führen.

Auf diese Weise kann ein Roboter durch die Unkrautverhinderungseinrichtung geführt werden. Das kann Arbeiten an der Pflanze erleichtern. Zu solchen Arbeiten zählen das Ernten von Früchten, Schnittarbeiten, Bewässerungsarbeiten. In der Richtung senkrecht zur Aufnahmerichtung kann der Roboter zu benachbarten Pflanzen geführt werden.

Vorzugsweise ist die Roboterführungseinrichtung zumindest abschnittsweise rinnenartig und/oder schienenartig an einer der Unterseite entgegengesetzten Oberseite ausgebildet.

Damit kann die Oberseite zur Führung eines Roboters genutzt werden, und Arbeiten des Roboters an der Oberseite durchgeführt werden.

Gemäss noch einem weiteren Aspekt kann zumindest der Umgebungsabschnitt aus einem Material, das Beton umfasst oder davon gebildet wird, bestehen.

Somit kann das nötige Gewicht für den Umgebungsabschnitt bereitgestellt werden. Auch kann die Lichtundurchlässigkeit gewährleistet werden. Dies kann das Wachstum von Unkraut zuverlässig verhindern.

Gemäss noch einem weiteren Aspekt kann die Unkrautverhinderungseinrichtung aus einer Vielzahl von miteinander koppelbaren, vorzugsweise lösbar koppelbaren, Unterelementen gebildet werden, wobei die Vielzahl von Unterelementen den Umgebungsabschnitt und einen Raum für den Aufnahmeabschnitt bilden.

Somit kann die Unkrautverhinderungseinrichtung auch nachträglich bei bereits gewachsener Pflanze um einen Pflanzenstamm herum vorgesehen werden. Denn der Aufnahmeabschnitt kann aus mehreren Teilen zusammengesetzt werden, sodass die Unterelemente in einer radialen Richtung an den Pflanzenstamm annäherbar sind.

Es ist zur Kenntnis zu nehmen, dass die Unterelemente nicht nur einen jeweiligen Teilabschnitt für den Aufnahmeabschnitt und den Umgebungsabschnitt aufweisen können. Sie können auch Teilabschnitte für zumindest einen des Bewässerungsführungsabschnitts und des Roboterführungsabschnitts enthalten.

Die Unterelemente sind vorzugsweise abdichtend aneinander gekoppelt. So kann ein Dichtelement zwischen benachbarten Unterelementen vorgesehen werden.

Die Erfindung bezieht sich weiterhin auf ebenso ein Unterelement, wobei es zumindest einen der erwähnten Teilabschnitte und zumindest eine der Eigenschaften der obigen Aspekte aufweisen kann.

Weiterhin sieht die Erfindung ein Verfahren zur Herstellung einer Unkrautverhinderungseinrichtung nach einem der obigen Aspekte oder für ein besagtes Unterelement vor, wobei das Verfahren umfasst: Errichten einer Gussform auf dem Boden, wobei die Gussform zumindest abschnittsweise den Umgebungsabschnitt definiert, und Befüllen der Gussform mit einem aushärtbaren Giessmaterial.

Somit kann die Unkrautverhinderungseinrichtung oder das Unterelement in situ gefertigt werden. Das erspart den Transport der Unkrautverhinderungseinrichtung. Der Aufnahmeabschnitt kann nach dem Aushärten des Giessmaterials hergestellt werden, oder kann ebenfalls durch die Gussform definiert werden. Der Boden wird hier vorzugsweise von Erdreich gebildet.

Ein weiterer Aspekt sieht eine Unkrautverhinderungsanordnung vor, die den Boden bestehend aus Erdreich und die Unkrautverhinderungseinrichtung und/oder zumindest ein Unterelement nach einem der obigen Aspekte umfasst. Weiterhin kann sie den Pflanzenstamm umfassen, der in dem Aufnahmeabschnitt aufgenommen ist.

Somit kann das Unkrautwachstum aus dem Erdreich zuverlässig unterbunden werden.

Noch ein weiterer Aspekt bezieht sich auf die Verwendung einer Unkrautverhinderungseinrichtung nach einem der obigen Aspekte zur Verhinderung von Unkrautwachstum, insbesondere für eine Unkrautverhinderungsanordnung gemäss dem obigen Aspekt. Ebenso bezieht sich diese Erfindung auf die Verwendung eines Unterelements nach einem der obigen Aspekte für eine Unkrautverhinderungseinrichtung.

Die obigen Aspekte werden nun detailliert unter Bezugnahme auf die Zeichnungen beschrieben.
Fig. 1 zeigt eine perspektivische Ansicht einer Unkrautverhinderungsanordnung mit einer Unkrautverhinderungseinrichtung der Erfindung.
Fig. 2 zeigt eine Schnittansicht entlang Linie II-II von Fig. 1.
Fig. 3 zeigt ein Ablaufdiagramm eines Herstellungsverfahrens für die Unkrautverhinderungseinrichtung.

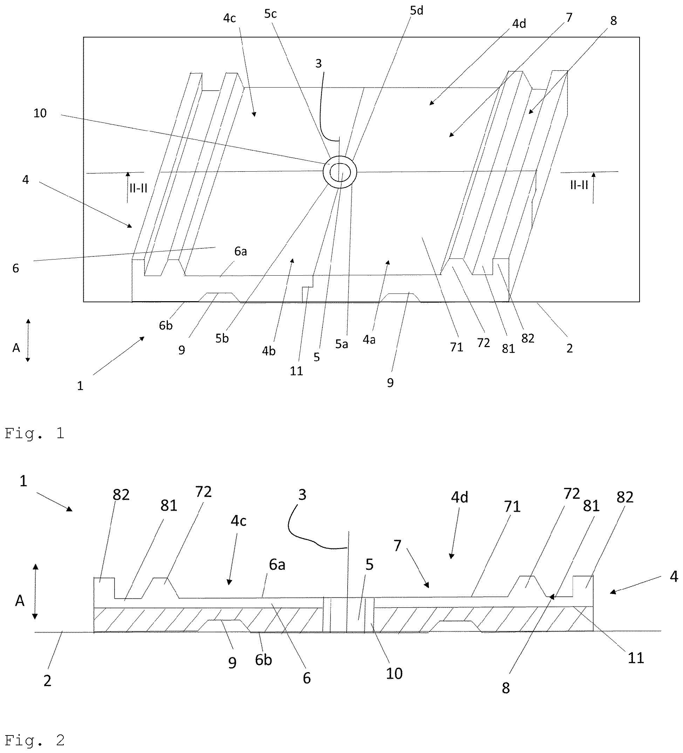

Eine Unkrautverhinderungsanordnung 1 ist in den Figuren 1 und 2 gezeigt. Sie weist einen Boden 2 auf, der von Erdreich geformt wird. Er ist hier nur schematisch gezeigt. Eine Oberfläche des Bodens 2 verläuft im Wesentlichen eben, und kann beispielsweise planiert sein. Es ist zur Kenntnis zu nehmen, dass der Boden 2 in Bezug auf eine horizontale Richtung geneigt sein kann, wie es zum Beispiel bei Weinbergen der Fall ist.

Aus dem Boden 2 erhebt sich im Wesentlichen senkrecht zur Oberfläche davon ein Pflanzenstamm 3, der ebenfalls schematisch dargestellt ist. Der Pflanzenstamm 3 ist Teil einer Kulturpflanze. Kulturpflanzen können Weinreben sein, oder beispielsweise andere Obstpflanzen.

Weiterhin umfasst die Unkrautverhinderungsanordnung 1 eine Unkrautverhinderungseinrichtung 4.

Die Unkrautverhinderungseinrichtung 4 weist einen Aufnahmeabschnitt 5 auf. Der Aufnahmeabschnitt 5 ist hier eine im Wesentlichen kreisrunde Durchgangsöffnung. Durch den Aufnahmeabschnitt 5 erstreckt sich in einer Aufnahmerichtung A senkrecht zum Boden der Pflanzenstamm 3.

Der Aufnahmeabschnitt 5 wird hier entlang seines Umfangs vollständig von einem Umgebungsabschnitt 6 der Unkrautverhinderungseinrichtung umgeben. Der Umgebungsabschnitt 6 weist eine Oberseite 6a und eine gegenüberliegende Unterseite 6b auf. Die Unterseite 6b ist dem Boden 2 zugewandt. Der Aufnahmeabschnitt ist bevorzugt mittig in Bezug auf den Umgebungsabschnitt 6 vorgesehen, entlang der Aufnahmerichtung A gesehen. Die Unterseite 6b kann sich bis zu einem Abstand von mindestens 0,5 m von einem Rand des Aufnahmeabschnitts erstrecken, vorzugsweise über den gesamten Umfang. Auch in anderen Ebenen senkrecht zur Aufnahmerichtung A kann dieser Abstand eingehalten werden.

Der Umgebungsabschnitt 6 ist kontinuierlich von einem Vollmaterial, beispielsweise Beton, gebildet.

Die Oberseite 6a und die Unterseite 6b sind jeweils koplanar mit einer Oberseite und einer Unterseite des Aufnahmeabschnitts 5 vorgesehen (mit einem oberen Ende und einem unteren Ende in Aufnahmerichtung davon).

Der Umgebungsabschnitt 6 ist im Wesentlichen plattenartig ausgebildet. Er ist in einem radial inneren Bereich bezogen auf den Aufnahmeabschnitt plattenartig ausgebildet. Das heisst, er weist dort jeweils ebene und parallele Ober- und Unterseiten auf.

Der radial innere Bereich ist an der Oberseite 6a Teil einer Bewässerungsführungseinrichtung 7. Die Bewässerungsführungseinrichtung 7 ist hier zumindest abschnittsweise rinnenartig ausgebildet und weist einen Rinnenabschnitt 71 (radial innerer Bereich) und einen Begrenzungswandabschnitt 72, der sich an der Oberseite 6a in Aufnahmerichtung A erhebt, sowie den Aufnahmeabschnitt 5 auf. Der Begrenzungswandabschnitt 72 ist jeweils im radial äusseren Bereich entlang einer Querrichtung, die senkrecht zur Aufnahmerichtung A verläuft, von dem Aufnahmeabschnitt 5 vorgesehen und definiert den Rinnenabschnitt 71 dazwischen. Der Begrenzungswandabschnitt 72 und der Rinnenabschnitt 71 erstrecken sich linear in einer Richtung senkrecht zur Aufnahmerichtung (parallel zum Boden 2) und senkrecht zur Querrichtung.

Mit anderen Worten verläuft der Rinnenabschnitt 71 (Bewässerungsführungseinrichtung 7) in einer Längsrichtung. Die Bewässerungsführungseinrichtung erstreckt sich vorzugsweise bis zu den Rändern des Umgebungsabschnitts 6.

An der Oberseite 6a ist weiterhin eine Roboterführungseinrichtung 8 ausgebildet. Die Roboterführungseinrichtung 8 ist in Querrichtung der Bewässerungsführungseinrichtung 7 benachbart. Sie befindet sich vorzugsweise auf einer Aussenseite der Bewässerungsführungseinrichtung. Sie verläuft linear und parallel dazu in Längsrichtung und erstreckt sich ebenfalls vorzugsweise bis zu den Rändern des Umgebungsabschnitts 6. Vorzugsweise weisen Roboterführungseinrichtung 8 und Bewässerungsführungseinrichtung 7 zumindest abschnittsweise parallele Führungsrichtungen auf bzw. erstrecken sich entlang derselben Richtung.

Der Roboterführungsabschnitt 8 ist auch rinnenartig ausgebildet, und ein Rinnenabschnitt 81 davon wird auf einer inneren Seite in Querrichtung von dem Begrenzungswandabschnitt 72 definiert. Auf der äusseren Seite ist ein weiterer Roboterführungsbegrenzungswandabschnitt 82 ausgebildet. Zur Kenntnis zu nehmen ist, dass der Roboterführungsabschnitt 8 auf beiden Seiten in Querrichtung zu dem Aufnahmeabschnitt 5 vorgesehen ist.

Auf der Unterseite 6b ist in Querrichtung mittig ein konkaver Abschnitt 9 ausgebildet. Der konkave Abschnitt 9 erstreckt sich in Längsrichtung und überlappt in Aufnahmerichtung mit dem Rinnenabschnitt 71. Er erstreckt sich in Längsrichtung bis zu den Rändern des Umgebungsabschnitts 6. Die Unterseite 6b liegt im Bereich des konkaven Abschnitts 9 nicht auf dem Boden 2 auf. Vielmehr wird zwischen dem konkaven Abschnitt 9 und dem Boden 2 ein Aufnahmeraum gebildet, der als Mikrobiologie-Reservoir angesehen werden kann.

Weiterhin ist ein elastischer Abschnitt 10 vorgesehen. Der elastische Abschnitt 10 wird hier von einem Gummiring gebildet und weist so eine umfänglich geschlossene Gestalt auf. Der elastische Abschnitt 10 ist in radialer Richtung zwischen Aufnahmeabschnitt 5 und dem Umgebungsabschnitt 6 vorgesehen. Der elastische Abschnitt definiert durch seine radiale Innenseite den Aufnahmeabschnitt 5. Eine maximale Öffnungsabmessung des Aufnahmeabschnitts 5 im unverformten Zustand des elastischen Abschnitts 10 kann 0,05 m vorzugsweise 0,02 m betragen.

Wie in Fig. 1 zu sehen, weist die Unkrautverhinderungseinrichtung 4 hier vier Unterelemente 4a-d auf. Diese Unterelemente 4a-d sind so angeordnet, dass sie den kontinuierlichen Umgebungsabschnitt 6 bilden, weisen jeweils also einen Umgebungsabschnittteilabschnitt auf. Weiterhin weisen sie jeweils einen Aufnahmeabschnittbildungsabschnitt 5a-5d. auf.

Die Unterelemente 4a-4d (Umgebungsabschnittteilabschnitte) weisen in Aufnahmerichtung A gesehen im Wesentlichen eine rechteckige Gestalt auf, ebenso wie der gesamte Umgebungsabschnitt 6. Der Aufnahmeabschnittbildungsabschnitt 5a-5d ist jeweils ein nicht konkaver Eckenabschnitt der Unterelemente 4a-d. Hier ist er ein bogenförmiger konkaver Abschnitt. Der Aufnahmeabschnittbildungsabschnitt 5a-5d definiert jeweils einen viertel Kreissektor (Kehrwert der Anzahl der Unterelemente) des Aufnahmeabschnitts 5 in Bezug auf eine Achse entlang der Aufnahmerichtung. Somit bilden die Aufnahmeabschnittbildungsabschnitte 5a-5d in kontinuierlicher Weise einen Raum für den Aufnahmeabschnitt.

Entlang einander zugewandter Seitenabschnitte (Seitenabschnitte in Querrichtung in Fig. 1 der Unterelemente 4a und 4b) weisen die Umgebungsabschnittsteilabschnitte jeweils Stufenabschnitte 11 auf, sodass sich die Stufenabschnitte benachbarter Unterelemente 11 zumindest abschnittsweise in Aufnahmerichtung A gegenüberliegen. Ein elastisches Dichtelement (nicht gezeigt) kann über die gesamte Länge der Schnittstelle zwischen Abschnitten des Stufenabschnitts 11, die sich in Aufnahmerichtung gegenüberliegen, vorgesehen sein.

Jedes Unterelement weist zwei zugewandte Seitenabschnitte auf, die im jeweiligen Aufnahmeabschnittbildungsabschnitt 5a-d zusammen (sind kontinuierlich dazu) und definieren einen Winkel zwischen sich, der dem Umfangswinkel des Aufnahmeabschnittbildungsabschnitts 5a-5d (90°) entspricht. Die zwei zugewandten Seitenabschnitte definieren also den Umfangswinkel, mit dem ein Umgebungsabschnittteilabschnitt den Aufnahmeabschnitt umgibt. Im Falle eines bogenförmigen Aufnahmeabschnittbildungsabschnitt ist dieser Umfangswinkel vorzugsweise dem Umfangwinkel (Winkel des Sektors) des Aufnahmeabschnittbildungsabschnitts.

Zudem weisen die Unterelemente 4a-d jeweils Teilabschnitte der Roboterführungseinrichtung 8, der Bewässerungsführungseinrichtung 7 und des konkaven Abschnitts 9 auf, die, wenn die Unterelemente 4a-4d gekoppelt sind, die Roboterführungseinrichtung 8, die Bewässerungsführungseinrichtung 7, und den konkaven Abschnitt 9 kontinuierlich in der jeweiligen Erstreckungsrichtung bilden. Besagte Teilabschnitte erstrecken sich vorzugsweise bis zu den Rändern der Umgebungsabschnittsteilabschnitte.

Funktionen und Effekte der Ausführungsform werden nun beschrieben.

Da der Aufnahmeabschnitt 5 von dem Umgebungsabschnitt 6 umgeben ist, kann der Pflanzenstamm 3 gezielt im Aufnahmeabschnitt wachsen. So wird Licht in dem Aufnahmeabschnitt gebündelt.

Weiterhin liegt der Umgebungsabschnitt 6 auf dem Boden 2 auf. Der Umgebungsabschnitt 6 hat also eine Beschwerungsfunktion für den Boden 2. Dies unterbindet im Wesentlichen ein Unkrautwachsen in der Umgebung des Pflanzenstamms 3.

Dazu kann der Umgebungsabschnitt 6 einen Anpressdruck (Kraft bezogen auf die ebene Kontaktfläche an der Unterseite) von mindestens 100 N/m², vorzugsweise mindestens 200 N/mm², nochmals bevorzugt von mindestens 500 N/m² aufbringen.

Weiterhin kann der Umgebungsabschnitt 6 eine gemittelte Dichte von mindestens 1000 kg/m³, vorzugsweise von mindestens 2000 kg/m³, nochmals bevorzugt von mindestens 2.500 kg/m³ aufweisen.

Somit kann ein ausreichendes Gewicht zum Beschweren bereitgestellt werden. Die Werte von Dichte und Anpressdruck können in jeder Kombination vorliegen.

Weiterhin kann der Umgebungsabschnitt 6 eine UV-Transmissionsgrad von maximal 50 %, bevorzugt maximal 20 %, nochmals bevorzugt maximal 10 % (bei Lichteinfall entlang der Aufnahmerichtung A) aufweisen. Insbesondere kann er für UV-Strahlung im Wesentlichen undurchlässig sein.

Auch dadurch kann Unkrautwachstum verzögert, insbesondere unterbunden, werden.

Der konkave Abschnitt 9 an der Unterseite 6b stellt einen Aufnahmeraum für Lebewesen, wie Bakterien und Kriechtiere, dar, die zur Auflockerung des Bodens 2 dienen können. Er erstreckt sich bis zu den Rändern des Umgebungsabschnitts 6. Damit kann ein effektiver Austausch mit der Umgebung stattfinden.

Durch den elastischen Abschnitt 10 kann eine Öffnungsabmessung in einer Ebene senkrecht zur Aufnahmerichtung kontinuierlich verändert werden. Insbesondere kann das Wachstum des Pflanzenstamms 3 selbst den elastischen Abschnitt 10 nach aussen drücken. Zur Kenntnis zu nehmen ist, dass der elastische Abschnitt 10 so am Umgebungsabschnitt angebracht sein kann, dass ein Ausgleichsraum zur Verformung vorgesehen ist.

Die Bewässerungsführungseinrichtung 7 kann ein flüssiges Bewässerungsmedium, wie Wasser führen. Sie führt dieses über den Rinnenabschnitt 71 entlang der Oberseite 6a. Weiterhin weist sie zumindest abschnittsweise in kontinuierlicher Weise den Aufnahmeabschnitt 5 auf, sodass das Bewässerungsmedium in Richtung Boden 2 geführt wird. Damit kann das Bewässerungsmedium nahe am Stamm 3 dem Boden 2 zugeführt werden.

Zur Kenntnis zu nehmen ist, dass mehrere Pflanzen (Pflanzenstämme) in der Unkrautverhinderungsanordnung entlang der Längsrichtung aufgereiht sein können. Dann können auch mehrere Unkrautverhinderungseinrichtungen 4 entlang der Längsrichtung aufgereiht sein, sodass die Bewässerungsführungseinrichtungen 7 entlang der Längsrichtung kontinuierlich sind. So kann das Bewässerungsmedium am Anfang der Reihe der Unkrautverhinderungseinrichtungen 4 aufgebracht werden und wird dann aufgrund der Bewässerungsführungseinrichtung entlang der Oberseiten der einzelnen Unkrautverhinderungseinrichtungen 4 geführt. Dabei strömt es in die einzelnen Aufnahmeabschnitte 5. Sind diese gefüllt, wird das Wasser stromabwärts zur nächsten Unkrautverhinderungseinrichtung 4 in Längsrichtung geführt.

Die Roboterführungseinrichtung 8 ermöglicht es, einen Roboter entlang der Oberseite 6a zu führen. Somit können Arbeiten an der Pflanze automatisiert werden.

Im Falle von einer Reihe von Unkrautverhinderungseinrichtungen 4 entlang der Längsrichtung, sind auch die Roboterführungseinrichtungen in Längsrichtung vorzugsweise kontinuierlich. So kann ein Roboter eine gesamte Reihe von Pflanzen bearbeiten.

Da Beton als Material für den Umgebungsabschnitt 6 verwendet wird, kann ausreichendes Gewicht und Festigkeit bereitgestellt werden.

Die Vielzahl von Unterelementen 4a-d, die kontinuierlich (insbesondere an der Oberseite 6a ohne Spalt) an den jeweiligen zugewandten Seitenabschnitten aneinandergekoppelt sind, erlauben eine einfache Montage der Unkrautverhinderungseinrichtung 4, selbst wenn bereits ein Pflanzenstamm 3 aus dem Boden 2 wächst. Ausserdem erleichtern sie die Wartung. Die Unterelemente 4a-d können kraft-, form- und/oder stoffschlüssig aneinandergekoppelt werden. In der Ausführungsform können benachbarte Unterelemente in Aufnahmerichtung aufeinander aufliegen, was durch das elastische Dichtelement ermöglicht wird. Die Reibung zwischen den Unterelementen unterbindet dann ein Verschieben. Zudem oder alternaitv kann eine Schraubverbindung zwischen benachbarten Unterelementen vorgesehen werden. Dazu kann jeweils ein Flansch an zugewandten Seitenabschnitten benachbarter Umgebungsabschnitte vorgesehen werden.

Zur Kenntnis zu nehmen ist, dass die Unterelemente ebene zugewandte Seitenabschnitte zu benachbarten Unterelementen aufweisen. Die Seitenabschnitte laufen im Aufnahmeabschnittbildungsabschnitt 5a-5d zusammen und schliessen einen Winkel ein, der dem Winkel des Kreissektors entspricht, in dem sich der Aufnahmeabschnittbildungsabschnitt in Umfangsrichtung erstreckt. Dies erleichtert die Montage durch die Unterelemente.

Sind die Unterelemente 4a-d über ein Dichtelement aneinandergekoppelt, kann das ungewollte Abfliessen von Wasser verhindert werden.

Der Stufenabschnitt 11 dient auch als Abflussvergrösserungspfad, der selbst ohne Dichtelement ein direktes Abfliessen in den Boden erschwert.

Auch wenn nicht dargestellt, kann die Unkrautverhinderungseinrichtung 4 eine Kühleinrichtung (die Unterelemente haben entsprechende Teilabschnitte) aufweisen, die die Unterseite 6b, insbesondere den konkaven Abschnitt 9, kühlt. Somit kann Verdunstungswasserdampf kondensiert werden und kann dann wieder zum Boden 2 abtropfen.

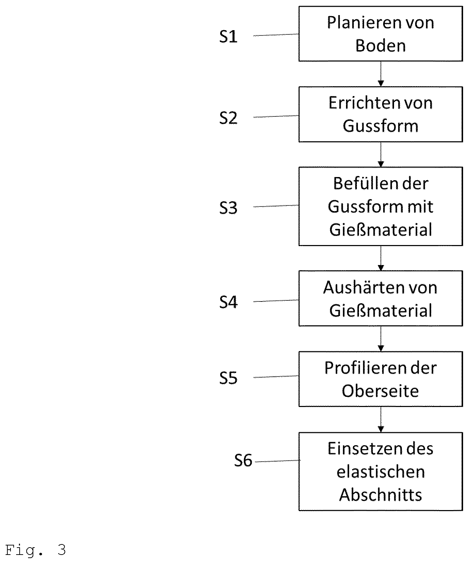

In Fig. 3 ist ein Ablaufdiagramm zur Herstellung einer Unkrautverhinderungseinrichtung 4 gezeigt.

Zunächst wird in einem ersten Schritt S1 der Boden 2 planiert.

Dann kann optional eine Abdeckung auf dem Boden aufgebracht werden.

Anschliessend wird in einem Schritt S2 eine Gussform beispielsweise aus Holzplatten auf dem Boden 2 errichtet. Die Gussform definiert zumindest die Aussengeometrie des Umgebungsabschnitts 6. Die Gussform kann auch Kerne für den Aufnahmeabschnitt 5 und den konkaven Abschnitt 9 enthalten.

In einem Schritt S3 wird dann ein Giessmaterial, wie Beton, in die Gussform gegeben.

Anschliessend wird in einem Schritt S4 das Giessmaterial, vorzugsweise unter Druck und/oder Vibration, ausgehärtet.

In einem Schritt S5 wird die Oberseite 6a gemäss der Bewässerungsführungseinrichtung 7 und der Roboterführungseinrichtung 8 profiliert.

Abschliessend wird in einem Schritt S6 der elastische Abschnitt 10 in den Raum für den Aufnahmeabschnitt 5 eingesetzt, sodass er letztlich den Aufnahmeabschnitt 5 definiert. Der elastische Abschnitt 10 kann durch Stoffschluss, Formschluss, und/oder Kraftschluss am Umgebungsabschnitt 6 befestigt werden. Er ist vorzugsweise zumindest an der Oberseite abdichtend an den Umgebungsabschnitt gekoppelt.

In ähnlicher Weise kann auch ein Unterelement gefertigt werden, wobei statt dem Kern für den Raum für den Aufnahmeabschnitt der Aufnahmeabschnittbildungsabschnitt 5a-d an der Aussengeometrie des Umgebungsabschnittteilabschnitts durch die Gussform geformt wird.

Zur Kenntnis zu nehmen ist, dass der Umgebungsabschnitt eine Abmessung von 0,9 m in der Längsrichtung, 0,5 m in der Querrichtung, und 0,06 m in der Aufnahmerichtung aufweisen kann. Jedoch sind Quer- und Längsrichtung hier nur für Anschauungszwecke definiert. Es ist auch ein Umgebungsabschnitt 6 mit quadratischem Grundriss denkbar.

Weiterhin können andere Materialien als Beton verwendet werden. So kann thermoplastischer Kunststoff als Giessmaterial verwendet werden. Jedoch sind auch Metallmaterialien denkbar.

Der Umgebungsabschnitt muss nicht eben an Ober- und/oder Unterseite sein. Er kann auch durchgängig gewellt sein.

Der Umgebungsabschnitt muss nicht auf dem Boden aufliegen. Es ist denkbar, dass der Umgebungsabschnitt auf Stützen vom Boden beabstandet aufliegt. Er ist dann jedoch vorzugsweise UV-undurchlässig.

Der elastische Abschnitt 10 kann entfallen und eine Öffnungsabmessung des Aufnahmeabschnitts muss nicht veränderlich sein. Es ist auch möglich eine Öffnungsabmessung über einen Mechanismus zu variieren. Wenn die Öffnungsabmessung nicht veränderlich ist, ist eine maximale Öffnungsabmessung vorzugsweise mindestens 0,1 m, nochmals bevorzugt mindestens 0,15 m. Der Aufnahmeabschnitt muss nicht kreisrund im Querschnitt sein. Er kann beispielsweise quadratisch sein.

Wenn der elastische Abschnitt entfällt, wird der Aufnahmeabschnitt durch die radiale Innenseite des Basisabschnitts definiert. Dann bilden die Aufnahmeabschnittbildungsabschnitte der Unterelemente nicht nur einen Raum für den Aufnahmeabschnitt (im Falle eines elastischen Abschnitts wird der Gummiring in diesen Raum eingesetzt), sondern direkt den Aufnahmeabschnitt.

Die Bewässerungsführungseinrichtung muss nicht entlang der Oberseite führen und sich dort bis zu den Rändern erstrecken. Beispielsweise sind Durchgangsbohrungen entlang der Aufnahmerichtung durch den Umgebungsabschnitt denkbar. Auch kann sie kanalartig im Inneren des Umgebungsabschnitts entlang der Längsrichtung verlaufen.

Die Roboterführungseinrichtung kann auch anders als rinnenartig ausgestaltet sein, Beispielsweise können zwei parallele Schienen als Roboterführungseinrichtung dienen. Auch hier kann ein Teil der Roboterführungseinrichtung durch die Bewässerungsführungseinrichtung gebildet werden. So kann der Begrenzungswandabschnitt 72 dann eine Schiene bilden.

Die Unkrautverhinderungseinrichtung muss nicht aus mehreren Unterelementen bestehen. So kann ein monolithischer Umgebungsabschnitt vorgesehen werden, wie im Verfahren nach Fig. 3 beschrieben.

Im Falle von Unterelementen ist deren Anzahl nicht beschränkt. So können zwei, drei oder mehr Unterelemente für eine Unkrautverhinderungseinrichtung vorgesehen werden, wobei der jeweilige Aufnahmeabschnittbildungsabschnitt und der Umgebungsabschnittteilabschnitt jeweils einen Bruchteil gemäss dem Kehrwert der Anzahl von einem Kreissektor darstellen können. Beispielsweise können der Aufnahmeabschnittbildungsabschnitt, bevorzugt bogenförmig, und die zugewandten Seitenabschnitte des Umgebungsabschnittteilabschnitts einen Winkel von 180° definieren.

Die Bewässerungsführungseinrichtung kann auch mehrere Rinnenabschnitte an der Oberseite aufweisen. Diese können sich parallel zueinander linear in Längsrichtung erstrecken, wobei vorzugsweise ein Rinnenabschnitt in den Aufnahmeabschnitt mündet.

## Patentansprüche

1. Unkrautverhinderungseinrichtung (4) zur Verhinderung von Unkraut in der Umgebung eines aus einem Boden (2) wachsenden Pflanzenstamms (3), umfassend:
einen Aufnahmeabschnitt (5), der sich im Wesentlichen entlang einer Aufnahmerichtung (A) senkrecht zum Boden (2) erstreckt, und ausgestaltet ist, den Pflanzenstamm (3) aufzunehmen; und
einen Umgebungsabschnitt (6), der den Aufnahmeabschnitt (5) zumindest abschnittsweise umgibt und ausgestaltet ist, mit einer Unterseite (6b) dem Boden zugewandt zu sein.

2. Die Unkrautverhinderungseinrichtung (4) nach Anspruch 1, wobei
der Umgebungsabschnitt (6) einen UV-Transmissionsgrad von maximal 50%, vorzugsweise von maximal 20%, nochmals bevorzugt 10% aufweist.

3. Die Unkrautverhinderungseinrichtung (4) nach Anspruch 1 oder 2, wobei
die Unterseite (6b) zumindest abschnittsweise eben ausgebildet ist.

4. Die Unkrautverhinderungseinrichtung (4) nach einem der vorhergehenden Ansprüche, wobei
der Umgebungsabschnitt (6) einen konkaven Abschnitt (9) an der Unterseite (6b) aufweist.

5. Die Unkrautverhinderungseinrichtung (4) nach einem der vorhergehenden Ansprüche, wobei
eine Öffnungsabmessung des Aufnahmeabschnitts (5) veränderlich, vorzugsweise kontinuierlich veränderlich ist.

6. Die Unkrautverhinderungseinrichtung (4) nach Anspruch 5, weiterhin umfassend:
einen elastischen Abschnitt (10), der so vorgesehen ist, dass er die Veränderung der Öffnungsabmessung erlaubt.

7. Die Unkrautverhinderungseinrichtung (4) nach einem der der vorhergehenden Ansprüche, weiterhin umfassend:
eine Bewässerungsführungseinrichtung (7), die ausgestaltet ist, ein flüssiges Bewässerungsmedium, vorzugsweise zumindest abschnittsweise linear und/oder in Richtung Boden (2), zu führen.

8. Die Unkrautverhinderungseinrichtung (4) nach Anspruch 7, wobei
die Bewässerungsführungseinrichtung (7) zumindest abschnittsweise rinnenartig an einer der Unterseite (6b) entgegengesetzten Oberseite (6a) ausgebildet ist.

9. Die Unkrautverhinderungseinrichtung (4) nach Anspruch 7 oder 8, wobei
die Bewässerungsführungseinrichtung (7) zumindest abschnittsweise von dem Aufnahmeabschnitt (5) gebildet wird.

10. Die Unkrautverhinderungseinrichtung (4) nach einem der vorhergehenden Ansprüche, weiterhin umfassend:
eine Roboterführungseinrichtung (8), die ausgestaltet ist, einen Roboter, vorzugsweise entlang einer Richtung senkrecht zur Aufnahmerichtung (A), zu führen.

11. Die Unkrautverhinderungseinrichtung (4) nach Anspruch 10, wobei
die Roboterführungseinrichtung (8) zumindest abschnittsweise rinnenartig und/oder schienenartig an einer der Unterseite (6b) entgegengesetzten Oberseite (6a) ausgebildet ist.

12. Die Unkrautverhinderungseinrichtung (4) nach einem der vorhergehenden Ansprüche, wobei
zumindest der Umgebungsabschnitt (6) aus einem Material, das Beton umfasst oder davon gebildet wird, besteht.

13. Die Unkrautverhinderungseinrichtung (4) nach einem der vorhergehenden Ansprüche, wobei
die Unkrautverhinderungseinrichtung (4) aus einer Vielzahl von miteinander koppelbaren, vorzugsweise lösbar koppelbaren, Unterelementen (4a-d) gebildet wird, wobei
die Vielzahl von Unterelementen (4a-d) den Umgebungsabschnitt (6) und einen Raum für den Aufnahmeabschnitt (5) bilden.

14. Unterelement (4a-d) aus Anspruch 13 für eine Unkrautverhinderungseinrichtung (4) nach einem der Ansprüche 1 bis 12.

15. Verfahren zur Herstellung einer Unkrautverhinderungseinrichtung (4) nach einem der Ansprüche 1 bis 12 oder für ein Unterelement (4a-d) nach Anspruch 14, umfassend:
Errichten einer Gussform auf dem Boden, wobei die Gussform zumindest abschnittsweise den Umgebungsabschnitt (6) definiert, und
Befüllen der Gussform mit einem aushärtbaren Giessmaterial.
